# EUROPEAN PATENT APPLICATION

(11) **EP 4 611 101 A1**
(43) Date of publication of application: **03.09.2025**
(21) Application number: 23929265.9
(22) Date of filing: 29.03.2023
(51) Int. Cl.: H01M 10/0567, H01M 10/054, H01M 10/0568

(54) **ELECTROLYTE, SECONDARY BATTERY, AND ELECTRICAL APPARATUS**

(71) Applicant: Contemporary Amperex Technology (Hong Kong) Limited, Hong Kong (HK)
(72) Inventor: GUAN, Yingjie, Ningde, Fujian 352100 (CN); QIN, Meng, Ningde, Fujian 352100 (CN); ZHAO, Yuzhen, Ningde, Fujian 352100 (CN); WEN, Yan, Ningde, Fujian 352100 (CN); HUANG, Qisen, Ningde, Fujian 352100 (CN)
(74) Representative: Jacob, Reuben Ellis
(86) International application number: PCT/CN2023/084866
(87) International publication number: WO 2024/197667

(57) **Abstract**

The present application provides an electrolyte, a secondary battery and an electrical apparatus. The electrolyte contains a sodium salt and metal ions having ionic radii greater than that of a sodium ion. The electrolyte can effectively inhibit sodium dendrites, helping to improve the cycle performance and the high-temperature storage performance of batteries.

## Description

### TECHNICAL FIELD

The present application relates to the technical field of secondary batteries, and in particular, to an electrolyte, a secondary battery, and an electrical apparatus.

### BACKGROUND

In recent years, secondary batteries have been widely used in energy storage power systems such as hydropower, thermal power, wind power, and solar power stations, as well as in various fields such as electric tools, electric bicycles, electric motorcycles, electric vehicles, military equipment, and aerospace.

The performance of the electrolyte has a critical influence on the performance of secondary batteries. At present, the electrolyte has multiple defects and cannot meet the application requirements of the new generation of electrochemical systems.

### SUMMARY

The present application is made in view of the problems described above, and its purpose is to provide an electrolyte that can effectively inhibit sodium dendrites and help to improve the cycle performance and high-temperature storage performance of a battery.

A first aspect of the present application provides an electrolyte for a sodium secondary battery. the electrolyte includes a sodium salt and a metal ion having an ionic radius greater than an ionic radius of a sodium ion.

In the case that the ionic radius of the metal ion is greater than the ionic radius of the sodium ion, in one aspect, a steric hindrance effect can be generated for the sodium ion and the growth of sodium dendrites is avoided; in another aspect, the metal ion can generate a charge shielding effect, thus improving the current density of sodium ion deposition and promoting the uniform deposition of the sodium ion, and the charge shielding effect can be in synergism with the steric hindrance effect to inhibit the growth of sodium dendrites, avoiding short circuits inside the battery and improving the cycle performance and high-temperature storage performance of the battery.

In any embodiment, the metal ion includes one or more of K⁺, Ca²⁺, Sr²⁺, and Ba²⁺, and optionally, includes K⁺.

The metal ions described above all meet the requirement that the ionic radii thereof are greater than the ionic radius of the sodium ion, which can effectively inhibit the growth of sodium dendrites and improve the cycle performance and high-temperature storage performance of the battery. In addition, the metal ions described above are used as an electrode when in reduced state, and their standard electrode potential is lower than the standard electrode potential of sodium, such that during the charging process of the battery, the metal ions are not reduced into metal atoms for deposition, thus avoiding or reducing the influence on the deposition of the sodium ion.

In any embodiment, the electrolyte includes one or more of PF₆⁻, NO₃⁻, and ClO₃⁻.

In any embodiment, the electrolyte includes one or more of potassium hexafluorophosphate, calcium hexafluorophosphate, strontium hexafluorophosphate, barium hexafluorophosphate, potassium nitrate, calcium nitrate, strontium nitrate, barium nitrate, potassium perchlorate, calcium perchlorate, strontium perchlorate, and barium perchlorate, and optionally, includes one or more of potassium hexafluorophosphate, potassium nitrate, and calcium hexafluorophosphate.

The substances described above not only have steric hindrance effect and charge shielding effect, but also are compatible with the sodium salt in the electrolyte, thus avoiding or reducing the negative effect caused by the addition of the substances described above.

In any embodiment, a concentration of the metal ion in the electrolyte is 0.005 mol/L to 0.3 mol/L, and optionally, 0.01 mol/L to 0.1 mol/L.

Controlling the metal ion to have a suitable concentration in the electrolyte can not only avoid or reduce the situation where the metal ion cannot fully play its role due to its excessively low concentration, but also avoid and reduce the situation where the deposition of the sodium ion is affected due to the excessively high concentration of the metal ion, and the two situations result in the increase in the polarization of the battery and are unfavorable for the improvement of the performance of the battery. A suitable concentration of the metal ion is conducive to the uniform deposition of the sodium ion. Further controlling the concentration of the metal ion in the electrolyte to be 0.01 mol/L to 0.1 mol/L is conducive to further substantially improving the high-temperature storage performance of the battery.

In any embodiment, the sodium salt includes one or more of sodium chloride, sodium bromide, sodium nitrate, sodium perchlorate, sodium hexafluorophosphate, sodium acetate, sodium trifluoroacetate, sodium trifluoromethanesulfonate, sodium bis(fluorosulfonyl)imide, sodium bis(trifluoromethylsulfonyl)imide, sodium tetrafluoroborate, and sodium tetraphenylborate, and optionally, includes one or more of sodium hexafluorophosphate, sodium perchlorate, sodium bis(fluorosulfonyl)imide, sodium bis(trifluoromethylsulfonyl)imide, and sodium tetrafluoroborate.

The electrolytes including the sodium salts described above all have excellent cycle performance and high-temperature storage performance of the battery.

In any embodiment, a concentration of the sodium salt in the electrolyte is 0.1 mol/L to 1.8 mol/L, and optionally, 0.5 mol/L to 1.5 mol/L.

Controlling the sodium salt to have a suitable concentration in the electrolyte, in one aspect, avoids or reduces the situation where the conductivity of the sodium ion is decreased due to excessively low concentration of the sodium ion dissociated in the electrolyte caused by excessively low concentration of the sodium salt, and in other aspect, avoids or reduces the situation where the conductivity of the sodium ion is decreased due to the increase in the viscosity of the electrolyte caused by excessively high concentration of the sodium salt. A suitable concentration of sodium salt is conducive to the enhancement of the conductivity of the sodium ion. Further controlling the concentration of the sodium salt in the electrolyte to be 0.5 mol/L to 1.5 mol/L is conducive to further substantially improving the cycle performance and high-temperature storage performance of the battery.

In any embodiment, the electrolyte further includes an ether solvent, and the ether solvent includes one or more of ethylene glycol dimethyl ether, diethylene glycol dimethyl ether, triethylene glycol dimethyl ether, tetraethylene glycol dimethyl ether, polyethylene glycol dimethyl ether, diethyl ether, ethylene glycol diethyl ether, ethylene glycol dibutyl ether, diethylene glycol diethyl ether, diethylene glycol dibutyl ether, tetrahydrofuran, methyl tetrahydrofuran, and 1,3-dioxolane, and optionally, includes one or more of ethylene glycol diethyl ether, ethylene glycol dimethyl ether, ethylene glycol diethyl ether, diethylene glycol dimethyl ether, tetraethylene glycol dimethyl ether, and diethylene glycol dibutyl ether.

The ether solvents described above have excellent reduction resistance and can effectively reduce side reactions between the sodium metal and solvent, thus further improving the high-temperature storage performance of the battery.

In any embodiment, the ether solvent includes at least two of ethylene glycol dimethyl ether, diethylene glycol dimethyl ether, triethylene glycol dimethyl ether, tetraethylene glycol dimethyl ether, polyethylene glycol dimethyl ether, ethylene glycol diethyl ether, ethylene glycol dibutyl ether, tetrahydrofuran, methyl tetrahydrofuran, and 1,3-dioxolane, and optionally, includes at least two of ethylene glycol diethyl ether, ethylene glycol dimethyl ether, diethylene glycol dimethyl ether, triethylene glycol dimethyl ether, and tetraethylene glycol dimethyl ether.

The ether solvent includes at least two of ethylene glycol dimethyl ether, diethylene glycol dimethyl ether, triethylene glycol dimethyl ether, tetraethylene glycol dimethyl ether, polyethylene glycol dimethyl ether, ethylene glycol diethyl ether, ethylene glycol dibutyl ether, tetrahydrofuran, methyl tetrahydrofuran, and 1,3-dioxolane, which is conducive to further substantially improving the cycle performance and high-temperature storage performance of the battery.

In any embodiment, the electrolyte further includes a fluoroether compound, and the fluoroether compound includes one or more of 1,1,2,2-tetrafluoroethyl 2,2,3,3-tetrafluoropropyl ether (TTE), bis(2,2,2-trifluoroethyl)ether, 1,1,2,2-tetrafluoroethyl methyl ether (TME), 1, 1,2,2-tetrafluoroethyl-2,2,2-trifluoroethyl ether (TFTFE), tris(trifluoroethoxy)methane (TFEO), methyl nonafluorobutyl ether (MFE), 1,1,1,3,3,3-hexafluoroisopropyl methyl ether (HFPM), and 1H,1H,5H-octafluoropentyl-1,1,2,2-tetrafluoroethyl ether (OFE), and optionally, includes one or more of 1,1,2,2-tetrafluoroethyl 2,2,3,3-tetrafluoropropyl ether and bis(2,2,2-trifluoroethyl)ether.

The fluoroether compounds described above are inert fluoroether compounds and are located on the outermost layer of the solvation structure of the sodium ion; the fluoroether compounds described above have low reaction activity and are not prone to react with sodium metal, which improves the interface stability between the electrolyte and sodium metal and improves the cycle performance and high-temperature storage performance of the battery.

In any embodiment, a mass content of the fluoroether compound is 2% to 30%, and optionally, 5% to 20%, based on the total mass of the ether solvent and the fluoroether compound.

Controlling the mass content of the fluoroether compound to be within a suitable range is conducive to improving the cycle performance and high-temperature storage performance of the battery. Further controlling the mass content of the fluoroether compound to be 5% to 20% is conducive to further substantially improving the cycle performance and high-temperature storage performance of the battery.

In any embodiment, the sodium salt includes sodium hexafluorophosphate, the metal ion includes K⁺, the ether solvent includes ethylene glycol dimethyl ether, and the fluoroether compound includes 1,1,2,2-tetrafluoroethyl 2,2,3,3-tetrafluoropropyl ether.

The electrolyte described above which includes the sodium salt, the metal ion, the ether solvent, and the fluoroether compound is conducive to improving the cycle performance and high-temperature storage performance of the battery and improving the performance of the battery.

A second aspect of the present application provides a secondary battery, which includes the electrolyte according to the first aspect.

In any embodiment, the secondary battery is a negative electrode-free sodium secondary battery.

The negative electrode-free sodium secondary battery has a high energy density.

In any embodiment, the secondary battery further includes a negative electrode plate, the negative electrode plate includes a negative electrode current collector and a bottom coating arranged on at least one surface of the negative electrode current collector, and the bottom coating includes one or more of a carbon nanotube, graphite, graphene, a silver-carbon composite nanoparticle, and a tin-carbon composite nanoparticle.

The bottom coating described above not only has excellent electrical conductivity, but also facilitates the uniform deposition of the metal ion on the surface of the current collector, thus improving the coulombic efficiency and cycle performance of the battery.

In any embodiment, a surface density of the bottom coating is 0.5 g/m² to 35 g/m².

The bottom coating with a surface density of 0.5 g/m² to 35 g/m² is conducive to the uniform distribution of nucleation sites in the negative electrode-free secondary battery, promotes the uniform deposition of metals, and does not affect the transmission of electrons.

In any embodiment, a thickness of the bottom coating is 0.2 µm to 50 µm.

Controlling the thickness of the bottom coating to be 0.2 µm to 50 µm can provide sufficient nucleation sites for the negative electrode-free secondary battery, facilitating the uniform deposition of the metal ion and inhibiting dendrite formation.

A third aspect of the present application provides an electrical apparatus, which includes the secondary battery according to the second aspect of the present application.

### BRIEF DESCRIPTION OF THE DRAWINGS

FIG. 1 is a schematic diagram of a secondary battery according to one embodiment of the present application;
FIG. 2 is an exploded view of the secondary battery according to one embodiment of the present application as shown in FIG. 1;
FIG. 3 is a schematic diagram of a battery module according to one embodiment of the present application;
FIG. 4 is a schematic diagram of a battery pack according to one embodiment of the present application;
FIG. 5 is an exploded view of the battery pack according to one embodiment of the present application as shown in FIG. 4;
FIG. 6 is a schematic diagram of an electrical apparatus using a secondary battery as a power source according to one embodiment of the present application.

Description of the reference numerals:
1: battery pack; 2: upper case body; 3: lower case body; 4: battery module; 5: secondary battery; 51: housing; 52: electrode assembly; 53: cover plate.

### DETAILED DESCRIPTION

Hereinafter, embodiments of the electrolyte, the secondary battery, and the electrical apparatus of the present application are specifically disclosed in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

Unless otherwise specified, the "include", "includes", "including", "comprise", and "comprises" mentioned in the present application are open-ended or closed-ended. For example, the "include", "includes", "including", "comprise", and "comprises" may mean that other unlisted components may also be included or comprised, or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

The growth of dendrites in the battery can easily bring about potential safety hazards, but also seriously affect the performance of the battery. Taking a sodium battery as an example, generally, the non-uniform current distribution will cause the growth of sodium dendrites. However, the electrolyte has no mechanical strength and cannot prevent the growth of sodium dendrites. Therefore, a new electrolyte needs to be designed to meet the requirements of the new generation of electrochemistry.

### [Electrolyte]

Based on this, the present application provides an electrolyte for a sodium secondary battery. The electrolyte includes a sodium salt and a metal ion having an ionic radius greater than an ionic radius of a sodium ion.

The term "sodium salt" used herein refers to a salt composed of sodium ions and anions and in a liquid state at room temperature or around room temperature. The room temperature refers to 25± 5 °C. The sodium salt includes, but is not limited to, one or more of sodium perchlorate, sodium hexafluorophosphate, sodium acetate, sodium trifluoroacetate, and sodium trifluoromethanesulfonate.

The term "ionic radius" used herein refers to the average distance from the nucleus to the outermost electrons. The ionic radius generally increases with the increase of the atomic number.

In the case that the ionic radius of the metal ion is greater than the ionic radius of the sodium ion, in one aspect, a steric hindrance effect can be generated for the sodium ion and the growth of sodium dendrites is avoided; in another aspect, the metal ion can generate a charge shielding effect, thus improving the current density of sodium ion deposition and promoting the uniform deposition of the sodium ion, and the charge shielding effect can be in synergism with the steric hindrance effect to inhibit the growth of sodium dendrites, avoiding short circuits inside the battery and improving the cycle performance and high-temperature storage performance of the battery.

In some embodiments, the metal ion includes one or more of K⁺, Ca²⁺, Sr²⁺, and Ba²⁺, and optionally, includes K⁺.

Herein, the ionic radius of Na⁺ is 0.097 nm, the ionic radius of K⁺ is 0.133 nm, the ionic radius of Ca²⁺ is 0.099 nm, the ionic radius of Sr²⁺ is 0.112 nm, and the ionic radius of Ba²⁺ is 0.134 nm.

Herein, when the Na⁺ in reduced state is used as an electrode, the standard electrode potential thereof is -2.711 V; when the potassium ion in reduced state is used as an electrode, the standard electrode potential thereof is -2.923 V; when the calcium ion in reduced state is used as an electrode, the standard electrode potential thereof is -2.76 V; when the Sr²⁺ in reduced state is used as an electrode, the standard electrode potential thereof is -2.89 V; when the Ba²⁺ in reduced state is used as an electrode, the standard electrode potential thereof is - 2.90 V.

The term "metal ion in reduced state" used herein refers to that the metal ion is reduced to obtain a metal atom.

The term "standard electrode potential" used herein refers to the standard potential of the electrode, i.e., the electrode potential measured when all substances involved in the electrode reaction are at an activity of 1 standard state.

In some embodiments, the metal ion includes K⁺. In some embodiments, the metal ion includes Ca²⁺. In some embodiments, the metal ion includes Ba²⁺. In some embodiments, the metal ion includes Sr²⁺.

The metal ions described above all meet the requirement that the ionic radii thereof are greater than the ionic radius of the sodium ion, which can effectively inhibit the growth of sodium dendrites and improve the cycle performance and high-temperature storage performance of the battery. In addition, the metal ions described above are used as an electrode when in reduced state, and their standard electrode potential is lower than the standard electrode potential of sodium, such that during the charging process of the battery, the metal ions are not reduced into metal atoms for deposition, thus avoiding or reducing the influence on the deposition of the sodium ion.

In some embodiments, the electrolyte includes one or more of PF₆⁻, NO₃⁻, and ClO₃⁻.

In some embodiments, the electrolyte includes PF₆⁻. In some embodiments, the electrolyte includes NO₃⁻. In some embodiments, the electrolyte includes ClO₃⁻.

In some embodiments, the electrolyte includes one or more of potassium hexafluorophosphate, calcium hexafluorophosphate, strontium hexafluorophosphate, barium hexafluorophosphate, potassium nitrate, calcium nitrate, strontium nitrate, barium nitrate, potassium perchlorate, calcium perchlorate, strontium perchlorate, and barium perchlorate, and optionally, includes one or more of potassium hexafluorophosphate, potassium nitrate, and calcium hexafluorophosphate.

In some embodiments, the electrolyte includes potassium hexafluorophosphate. In some embodiments, the electrolyte includes calcium nitrate. In some embodiments, the electrolyte includes strontium perchlorate. In some embodiments, the electrolyte includes potassium hexafluorophosphate and calcium nitrate. In some embodiments, the electrolyte includes potassium hexafluorophosphate and calcium hexafluorophosphate.

The substances described above not only have steric hindrance effect and charge shielding effect, but also are compatible with the sodium salt in the electrolyte, thus avoiding or reducing the negative effect caused by the addition of the substances described above.

In some embodiments, the concentration of the metal ion in the electrolyte is 0.005 mol/L to 0.3 mol/L, and optionally, 0.01 mol/L to 0.1 mol/L.

In some embodiments, the concentration of the metal ion in the electrolyte is optionally 0.005 mol/L, 0.01 mol/L, 0.05 mol/L, 0.1 mol/L, 0.12 mol/L, 0.15 mol/L, 0.18 mol/L, 0.2 mol/L, 0.22 mol/L, 0.25 mol/L, 0.27 mol/L, 0.3 mol/L, or a numerical value in a range formed by any two of the foregoing values.

Controlling the metal ion to have a suitable concentration in the electrolyte can not only avoid or reduce the situation where the metal ion cannot fully play its role due to its excessively low concentration, but also avoid and reduce the situation where the deposition of the sodium ion is affected due to the excessively high concentration of the metal ion, and the two situations result in the increase in the polarization of the battery and are unfavorable for the improvement of the performance of the battery. A suitable concentration of the metal ion is conducive to the uniform deposition of the sodium ion. Further controlling the concentration of the metal ion in the electrolyte to be 0.01 mol/L to 0.1 mol/L is conducive to further substantially improving the high-temperature storage performance of the battery.

In some embodiments, the sodium salt includes one or more of sodium chloride, sodium bromide, sodium nitrate, sodium perchlorate, sodium hexafluorophosphate, sodium acetate, sodium trifluoroacetate, sodium trifluoromethanesulfonate, sodium bis(fluorosulfonyl)imide, sodium bis(trifluoromethylsulfonyl)imide, sodium tetrafluoroborate, and sodium tetraphenylborate, and optionally, includes one or more of sodium hexafluorophosphate, sodium perchlorate, sodium bis(fluorosulfonyl)imide, sodium bis(trifluoromethylsulfonyl)imide, and sodium tetrafluoroborate.

In some embodiments, the sodium salt includes sodium chloride. In some embodiments, the sodium salt includes sodium tetrafluoroborate. In some embodiments, the sodium salt includes sodium trifluoroacetate. In some embodiments, the sodium salt includes sodium chloride. In some embodiments, the sodium salt includes sodium tetrafluoroborate.

The electrolytes including the sodium salts described above all have excellent cycle performance and high-temperature storage performance of the battery.

In some embodiments, the concentration of the sodium salt in the electrolyte is 0.1 mol/L to 1.8 mol/L, and optionally, 0.5 mol/L to 1.5 mol/L.

In some embodiments, the concentration of the sodium salt in the electrolyte is 0.1 mol/L, 0.2 mol/L, 0.4 mol/L, 0.5 mol/L, 0.6 mol/L, 0.8 mol/L, 1.0 mol/L, 1.2 mol/L, 1.4 mol/L, 1.5 mol/L, 1.6 mol/L, 1.8 mol/L, or a numerical value in a range formed by any two of the foregoing values.

Controlling the sodium salt to have a suitable concentration in the electrolyte, in one aspect, avoids or reduces the situation where the conductivity of the sodium ion is decreased due to excessively low concentration of the sodium ion dissociated in the electrolyte caused by excessively low concentration of the sodium salt, and in other aspect, avoids or reduces the situation where the conductivity of the sodium ion is decreased due to the increase in the viscosity of the electrolyte caused by excessively high concentration of the sodium salt. A suitable concentration of sodium salt is conducive to the enhancement of the conductivity of the sodium ion. Further controlling the concentration of the sodium salt in the electrolyte to be 0.5 mol/L to 1.5 mol/L is conducive to further substantially improving the cycle performance and high-temperature storage performance of the battery.

In some embodiments, the electrolyte further includes an ether solvent, and the ether solvent includes one or more of ethylene glycol dimethyl ether, diethylene glycol dimethyl ether, triethylene glycol dimethyl ether, tetraethylene glycol dimethyl ether, polyethylene glycol dimethyl ether, diethyl ether, ethylene glycol diethyl ether, ethylene glycol dibutyl ether, diethylene glycol diethyl ether, diethylene glycol dibutyl ether, tetrahydrofuran, methyl tetrahydrofuran, and 1,3-dioxolane, and optionally, includes one or more of ethylene glycol diethyl ether, ethylene glycol dimethyl ether, ethylene glycol diethyl ether, diethylene glycol dimethyl ether, tetraethylene glycol dimethyl ether, and diethylene glycol dibutyl ether.

In some embodiments, the ether solvent includes ethylene glycol diethyl ether. In some embodiments, the ether solvent includes diethylene glycol dimethyl ether. In some embodiments, the ether solvent includes tetraethylene glycol dimethyl ether. In some embodiments, the ether solvent includes ethylene glycol dimethyl ether. In some embodiments, the ether solvent includes ethylene glycol dimethyl ether. In some embodiments, the ether solvent includes tetrahydrofuran.

The ether solvents described above have excellent reduction resistance and can effectively reduce side reactions between the sodium metal and solvent, thus further improving the high-temperature storage performance of the battery.

In some embodiments, the ether solvent includes at least two of ethylene glycol dimethyl ether, diethylene glycol dimethyl ether, triethylene glycol dimethyl ether, tetraethylene glycol dimethyl ether, polyethylene glycol dimethyl ether, ethylene glycol diethyl ether, ethylene glycol dibutyl ether, tetrahydrofuran, methyl tetrahydrofuran, and 1,3-dioxolane, and optionally, includes at least two of ethylene glycol diethyl ether, ethylene glycol dimethyl ether, diethylene glycol dimethyl ether, triethylene glycol dimethyl ether, and tetraethylene glycol dimethyl ether.

In some embodiments, the ether solvent includes ethylene glycol dimethyl ether and diethylene glycol dimethyl ether. In some embodiments, the ether solvent includes ethylene glycol dimethyl ether and tetraethylene glycol dimethyl ether. In some embodiments, the ether solvent includes ethylene glycol dibutyl ether and diethylene glycol dimethyl ether. In some embodiments, the ether solvent includes ethylene glycol dimethyl ether and tetrahydrofuran.

The ether solvent includes at least two of ethylene glycol dimethyl ether, diethylene glycol dimethyl ether, triethylene glycol dimethyl ether, tetraethylene glycol dimethyl ether, polyethylene glycol dimethyl ether, ethylene glycol diethyl ether, ethylene glycol dibutyl ether, tetrahydrofuran, methyl tetrahydrofuran, and 1,3-dioxolane, which is conducive to further substantially improving the cycle performance and high-temperature storage performance of the battery.

In some embodiments, the electrolyte further includes a fluoroether compound, and the fluoroether compound includes one or more of 1,1,2,2-tetrafluoroethyl 2,2,3,3-tetrafluoropropyl ether (TTE), bis(2,2,2-trifluoroethyl)ether, 1,1,2,2-tetrafluoroethyl methyl ether (TME), 1, 1,2,2-tetrafluoroethyl-2,2,2-trifluoroethyl ether (TFTFE), tris(trifluoroethoxy)methane (TFEO), methyl nonafluorobutyl ether (MFE), 1,1,1,3,3,3-hexafluoroisopropyl methyl ether (HFPM), and 1H,1H,5H-octafluoropentyl-1,1,2,2-tetrafluoroethyl ether (OFE), and optionally, includes one or more of 1,1,2,2-tetrafluoroethyl 2,2,3,3-tetrafluoropropyl ether and bis(2,2,2-trifluoroethyl)ether.

In some embodiments, the fluoroether compound includes 1,1,2,2-tetrafluoroethyl 2,2,3,3-tetrafluoropropyl ether. In some embodiments, the fluoroether compound includes bis(2,2,2-trifluoroethyl)ether. In some embodiments, the fluoroether compound includes tris(trifluoroethoxy)methane. In some embodiments, the fluoroether compound includes 1H,1H,5H-octafluoropentyl-1,1,2,2-tetrafluoroethyl ether. In some embodiments, the fluoroether compound includes 1,1,2,2-tetrafluoroethyl 2,2,3,3-tetrafluoropropyl ether and bis(2,2,2-trifluoroethyl)ether.

The fluoroether compounds described above are inert fluoroether compounds and are located on the outermost layer of the solvation structure of the sodium ion; the fluoroether compounds described above have low reaction activity and are not prone to react with sodium metal, which improves the interface stability between the electrolyte and sodium metal and improves the cycle performance and high-temperature storage performance of the battery.

In some embodiments, the mass content of the fluoroether compound is 2% to 30%, and optionally, 5% to 20%, based on the total mass of the ether solvent and the fluoroether compound.

In some embodiments, the mass content of the fluoroether compound is 2%, 4%, 5%, 8%, 10%, 12%, 14%, 15%, 16%, 18%, 20%, 22%, 24%, 25%, 26%, 28%, 30%, or a numerical value in a range formed by any two of the foregoing values, based on the total mass of the ether solvent and the fluoroether compound.

Controlling the mass content of the fluoroether compound to be within a suitable range is conducive to improving the cycle performance and high-temperature storage performance of the battery. Further controlling the mass content of the fluoroether compound to be 5% to 20% is conducive to further substantially improving the cycle performance and high-temperature storage performance of the battery.

In some embodiments, the sodium salt includes sodium hexafluorophosphate, the metal ion includes K⁺, the ether solvent includes ethylene glycol dimethyl ether, and the fluoroether compound includes 1,1,2,2-tetrafluoroethyl 2,2,3,3-tetrafluoropropyl ether.

The electrolyte described above which includes the sodium salt, the metal ion, the ether solvent, and the fluoroether compound is conducive to improving the cycle performance and high-temperature storage performance of the battery and improving the performance of the battery.

### [Positive Electrode Plate]

The positive electrode plate includes a positive electrode current collector and a positive electrode active substance layer formed on at least part of the surface of the positive electrode current collector. The positive electrode active substance layer includes a positive electrode active substance. The positive electrode active substance may include at least one of a layered transition metal oxide, a polyanionic compound, and a Prussian blue compound.

The transition metal in the layered transition metal oxide may be at least one of Mn, Fe, Ni, Co, Cr, Cu, Ti, Zn, V, Zr, and Ce. Optionally, the layered transition metal oxide is, for example, NaxMO₂, where M is one or more of Ti, V, Mn, Co, Ni, Fe, Cr, and Cu, and 0 < x ≤ 1.

The polyanionic compound may be a class of compounds having metal ions, transition metal ions, and tetrahedral (YO₄)ₙ₋ anion units. The metal ion is optionally one of sodium ion, lithium ion, potassium ion, and zinc ion; the transition metal is optionally at least one of Mn, Fe, Ni, Co, Cr, Cu, Ti, Zn, V, Zr, and Ce; Y is optionally at least one of P, S, and Si; n represents the valence state of (YO₄)ⁿ⁻.

The Prussian blue compound may be a class of compounds having sodium ions, transition metal ions, and cyanide ions (CN-). The transition metal may be at least one of Mn, Fe, Ni, Co, Cr, Cu, Ti, Zn, V, Zr, and Ce. The Prussian blue compound is, for example, NaₐMe_{b}Me'_{c}(CN)₆, where Me and Me' are each independently at least one of Ni, Cu, Fe, Mn, Co, and Zn, 0 < a ≤ 2, 0 < b < 1, and 0 < c < 1.

The positive electrode active substance layer may also include a conductive agent to improve the conductive property of the positive electrode. The conductive agent is optionally one or more of Super P, acetylene black, carbon black, Ketjen black, a carbon dot, a carbon nanotube, graphite, graphene, and a carbon nanofiber.

The positive electrode active substance layer may also include a binder to firmly bond the positive electrode active substance and the optional conductive agent to the positive electrode current collector. The binder is optionally at least one of polyvinylidene fluoride (PVDF), polytetrafluoroethylene (PTFE), polyacrylic acid (PAA), polyvinyl alcohol (PVA), ethylene-vinyl acetate copolymer (EVA), styrene-butadiene rubber (SBR), carboxymethyl cellulose (CMC), sodium alginate (SA), polymethacrylic acid (PMA), and carboxymethyl chitosan (CMCS).

A conductive carbon plate, a metal foil, a carbon-coated metal foil, a porous metal plate, or a composite current collector may be used as the positive electrode current collector. The conductive carbon material of the conductive carbon plate is optionally one or more of Super P, carbon black, Ketjen black, a carbon dot, a carbon nanotube, graphite, graphene, and a carbon nanofiber. The metal materials of the metal foil, the carbon-coated metal foil, and the porous metal plate are each independently selected from at least one of copper, aluminum, nickel, and stainless steel. The composite current collector may be a composite current collector formed by combining a metal foil and a polymer base film.

In some embodiments, the positive electrode plate can be prepared in the following manner: dispersing the components described above for preparing the positive electrode plate, such as the positive electrode active material, the conductive agent, the binder, and any other components, in a solvent (such as N-methylpyrrolidone) to form a positive electrode slurry; and coating the positive electrode current collector with the positive electrode slurry, and performing drying, cold pressing, and other processes, such that the positive electrode plate can be obtained.

### [Negative Electrode Plate]

The negative electrode plate may only include a negative electrode current collector and does not include a negative electrode active material. The negative electrode plate may also have a metal phase pre-deposited on the negative electrode current collector.

In some embodiments, a metal foil or a composite current collector may be used as the negative electrode current collector. For example, as the metal foil, an aluminum foil or a copper foil may be used. The composite current collector may include a polymer material substrate and a metal layer formed on at least one surface of the polymer material substrate. The composite current collector can be fabricated by forming a metal material (copper, copper alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, the negative electrode plate includes a negative electrode current collector and a bottom coating arranged on at least one surface of the negative electrode current collector, and the bottom coating includes one or more of a carbon nanotube, graphite, graphene, carbon black, aluminum oxide, a silver-carbon composite nanoparticle, and a tin-carbon composite nanoparticle.

The term "carbon nanotube" used herein refers to a seamless hollow cylinder formed by rolling up single-layer or multi-layer graphene. The diameter of the tube is less than 100 nm, and the length of the tube exceeds 100 nm. By way of example, the carbon nanotube includes, but is not limited to, a single-walled carbon nanotube and/or a multi-walled carbon nanotube.

The bottom coating described above not only has excellent electrical conductivity, but also is conducive to the uniform deposition of the metal ion on the surface of the current collector, thus improving the cycle performance and safety of the battery.

In some embodiments, the surface density of the bottom coating is 0.5 g/m² to 35 g/m².

In some embodiments, the surface density of the bottom coating is optionally 0.5 g/m², 1 g/m², 5 g/m², 10 g/m², 15 g/m², 20 g/m², 25 g/m², 30 g/m², 35 g/m², or a numerical value in a range formed by any two of the foregoing values.

The bottom coating with a surface density of 5 g/m² to 50 g/m² is conducive to the uniform distribution of nucleation sites, promotes the uniform deposition of metals, and does not affect the transmission of electrons.

In some embodiments, the thickness of the bottom coating is 0.2 µm to 50 µm.

In some embodiments, the thickness of the bottom coating is optionally 0.2 µm, 0.5 µm, 1 µm, 2 µm, 5 µm, 10 µm, 15 µm, 20 µm, 25 µm, 30 µm, 35 µm, 40 µm, 45 µm, 50 µm, or a numerical value in a range formed by any two of the foregoing values.

Controlling the thickness of the bottom coating to be 2 µm to 100 µm can provide sufficient nucleation sites for the negative electrode-free secondary battery, facilitating the uniform deposition of the metal ion and inhibiting dendrite formation.

### [Separator]

In some embodiments, the secondary battery further includes a separator. The present application does not particularly limit the type of the separator, and any porous-structure separator known to have good chemical stability and mechanical stability may be selected and used.

In some embodiments, the material of the separator may be selected from at least one of polyethylene, polypropylene, polyvinylidene fluoride, aramid, polyethylene terephthalate, polytetrafluoroethylene, polyacrylonitrile, polyimide, polyamide, polyester, and a natural fiber. The separator may be a single-layer film or a multi-layer composite film, and there is no particular limitation on this. When the separator is a multi-layer composite film, the materials of the layers may be the same or different, and there is no particular limitation on this.

In some embodiments, the positive electrode plate, the negative electrode plate, and the separator may be manufactured into an electrode assembly through a winding process or a stacking process.

In some embodiments, the secondary battery may include an outer packaging. The outer packaging can be used for packaging the electrode assembly and electrolyte described above.

In some embodiments, the outer packaging of the secondary battery may be a hard shell, such as a hard plastic shell, an aluminum shell, or a steel shell. The outer packaging of the secondary battery may also be a soft pack, such as a pouch-type soft pack. The soft pack may be made of plastic, and examples of the plastic may include polypropylene, polybutylene terephthalate, polybutylene succinate, and the like.

### [Secondary Battery]

A secondary battery includes the electrolyte according to some embodiments.

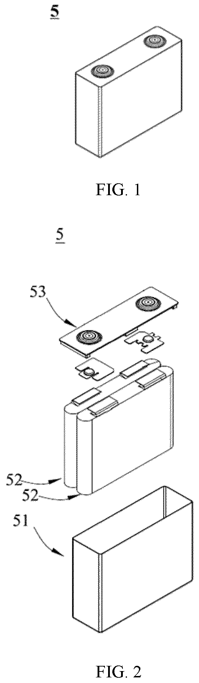

The present application does not particularly limit the shape of the secondary battery, and it may have a cylindrical shape, a prismatic shape, or any other shape. For example, FIG. 1 shows a battery cell 5 having a square structure as one example, and FIG. 2 is an exploded view of the battery cell 5.

In some embodiments, the secondary battery further includes a positive electrode plate, a negative electrode plate, and a separator.

In some embodiments, the secondary battery includes at least one of a lithium battery and a sodium battery.

In some embodiments, the secondary battery includes at least one of a potassium battery, a magnesium battery, and a zinc battery.

In some embodiments, the secondary battery is a negative electrode-free sodium battery.

The negative electrode-free sodium secondary battery refers to a battery formed without actively arranging a negative electrode active material layer on the negative electrode side during the manufacturing of the battery. For example, during the manufacturing of the battery, a sodium metal or carbonaceous active material layer is not arranged at the negative electrode by processes of coating, deposition, or the like to form a negative electrode active material layer. During the first charge, sodium ions gain electrons at the positive electrode side and are deposited as sodium metal on the surface of the current collector to form a sodium metal phase. During discharge, the sodium metal can be converted into sodium ions and return to the positive electrode, thus achieving cyclic charge and discharge. Compared with other sodium secondary batteries, the negative electrode-free sodium secondary battery may have a higher energy density due to the lack of a negative electrode active material layer.

In some embodiments, in order to enhance battery performance, some conventional substances that can be used as negative electrode active materials, such as carbonaceous materials, metal oxides, and alloys, may be arranged on the negative electrode side of the negative electrode-free sodium secondary battery. Although these materials have a certain capacity, they are not used as the main negative electrode active material in the battery due to their small amount, and therefore are not considered to form a negative electrode active material layer that plays a role in sodium intercalation. The sodium secondary battery thus constructed can still be considered as a negative electrode-free sodium secondary battery.

In some embodiments, the CB value of the negative electrode-free sodium secondary battery is smaller than or equal to 0.1.

The CB value is defined as the ratio of the capacity per unit area of the negative electrode plate to the capacity per unit area of the positive electrode plate in a secondary battery. Since the negative electrode-free battery includes no or only a small amount of negative electrode active material, the capacity per unit area of the negative electrode plate is small, and the CB value of the secondary battery is smaller than or equal to 0.1.

In some embodiments, referring to FIG. 2, the outer packaging may include a housing 51 and a cover plate 53. The housing 51 may include a bottom plate and a side plate connected to the bottom plate, and the bottom plate and the side plate define, in an enclosing manner, an accommodating cavity. The housing 51 is provided with an opening communicating with the accommodating cavity, and the cover plate 53 is capable of lidding the opening to close the accommodating cavity. The positive electrode plate, the negative electrode plate, and the separator may be subjected to a winding process or a stacking process to form an electrode assembly 52. The electrode assembly 52 is packaged in the accommodating cavity. The number of the electrode assembly 52 included in the secondary battery 5 may be one or more, and those skilled in the art can select the number according to specific and actual needs.

In some embodiments, the secondary battery may be assembled into a battery module. The number of secondary batteries included in the battery module may be one or more, and the specific number may be selected by those skilled in the art based on the use and capacity of the battery module.

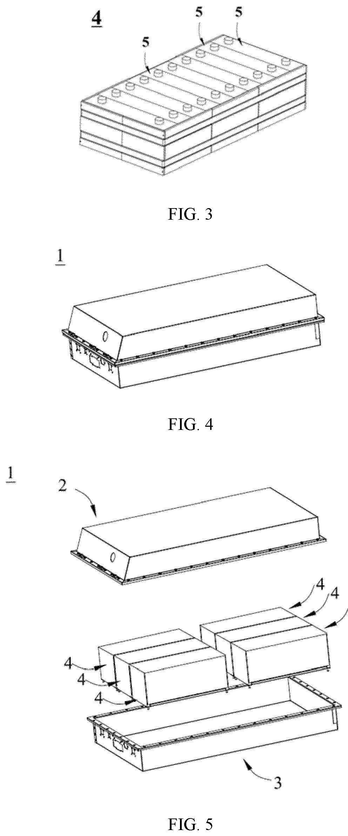

FIG. 3 shows a battery module 4 as one example. Referring to FIG. 3, in the battery module 4, a plurality of secondary batteries 5 may be sequentially arranged in a length direction of the battery module 4. Certainly, the arrangement may also be in any other manner. Further, the plurality of secondary batteries 5 may be fixed by a fastener.

Optionally, the battery module 4 may further include a shell having an accommodating space in which the plurality of secondary batteries 5 are accommodated.

In some embodiments, the battery module described above may also be assembled into a battery pack. The number of battery modules included in the battery pack may be one or more, and the specific number may be selected by those skilled in the art based on the use and capacity of the battery pack.

FIG. 4 and FIG. 5 show a battery pack 1 as one example. Referring to FIG. 4 and FIG. 5, the battery pack 1 may include a battery case and a plurality of battery modules 4 arranged in the battery case. The battery case includes an upper case body 2 and a lower case body 3. The upper case body 2 is capable of lidding the lower case body 3 to form a closed space for accommodating the battery modules 4. The plurality of battery modules 4 may be arranged in any manner in the battery case.

### [Electrical Apparatus]

In one embodiment of the present application, provided is an electrical apparatus, which includes at least one of the secondary battery according to any embodiment, the battery module according to any embodiment, or the battery pack according to any embodiment.

The electrical apparatus includes at least one of the secondary battery, the battery module, or the battery pack provided in the present application. The secondary battery, the battery module, or the battery pack can be used as a power source for the electrical apparatus, and they can also be used as an energy storage unit for the electrical apparatus. The electrical apparatus may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

As the electrical apparatus, a secondary battery, a battery module, or a battery pack may be selected based on its use requirements.

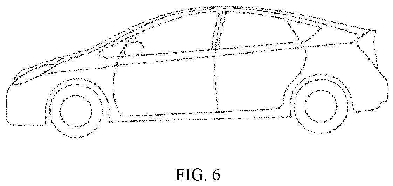

FIG. 6 shows an electrical apparatus as one example. The electrical apparatus is a pure electric vehicle, a hybrid electric vehicle, a plug-in hybrid electric vehicle, or the like. To meet the requirements of the electrical apparatus for high power and high energy density of the secondary battery, the battery pack or the battery module may be used.

As another example, the apparatus may be a mobile phone, a tablet computer, a laptop computer, or the like. The apparatus is generally required to be light and thin, and a secondary battery can thus be used as a power source.

### Examples

Hereinafter, examples of the present application are described. The examples described below are illustrative and are merely used to explain the present application, and they should not be construed as limiting the present application. Examples without techniques or conditions specified therein are implemented according to techniques or conditions described in the literature in the art or according to product instructions. Reagents or instruments used herein without specified manufacturers are all commercially available conventional products.

### I. Preparation method

### Example 1

### 1) Electrolyte

In a glove box under argon atmosphere (H₂O < 0.1 ppm, O₂ < 0.1 ppm), 22.2% ethylene glycol dimethyl ether (DME) and 77.8% ethylene glycol diethyl ether were uniformly mixed to obtain a mixed solvent. Then, a sodium salt, sodium hexafluorophosphate, and potassium hexafluorophosphate including a metal ion, potassium ion, were added to and dissolved in the mixed solvent described above. The mixture was uniformly stirred. The concentration of the sodium salt, sodium hexafluorophosphate, was controlled to be 1 mol/L, and the concentration of the metal ion, potassium ion, was controlled to be 0.03 mol/L, thus preparing the electrolyte.

### 2) Preparation of positive electrode plate

10 wt% binder, polyvinylidene difluoride, was thoroughly dissolved in N-methylpyrrolidone, and then 10 wt% conductive agent, carbon black, and 80 wt% positive electrode active material, Na₄Fe₃(PO₄)₂P₂O₇, were added. The mixture was stirred and uniformly mixed to obtain a positive electrode slurry. The surface of the current collector, an aluminum foil, was coated with the slurry evenly to prepare the positive electrode film layer, and the current collector was then transferred to a vacuum drying oven for complete drying. The dried electrode plate was calendered and then punched to obtain a positive electrode plate.

### 3) Preparation of negative electrode plate

5 g of CMC was taken and dissolved in 1000 mL deionized water, and then 5 g of single-walled carbon nanotube was added. After ultrasonic dispersion, the mixture was prepared into a slurry. The surface of a copper foil was then coated with the slurry. Finally, the copper foil was transferred to a vacuum drying oven for complete drying and then subjected to slitting and die cutting to prepare a negative electrode plate without a negative electrode structure.

### 4) Separator

A polypropylene film was used as the separator.

### 5) Preparation of battery

The positive electrode plate, the separator, and the negative electrode plate were stacked in sequence, with the separator placed between the positive electrode plate and the negative electrode plate for separation effect. Tabs were welded to a bare battery cell. The bare battery cell was then placed in an aluminum shell, which was then baked at 80 °C to remove water, injected with the electrolyte described above, and sealed to obtain an uncharged battery. The uncharged battery was then subjected to the processes of standing, hot and cold pressing, formation, shaping, capacity testing, and the like sequentially, thus obtaining the negative electrode-free sodium secondary battery product of Example 1.

### Examples 2-3

The batteries of Examples 2 to 3 were prepared using a method substantially similar to that of Example 1, except that the type of the ether solvent or the type of the metal ion was adjusted. The specific parameters are shown in Table 1.

### Example 4

The battery of Example 4 was prepared using a method substantially similar to that of Example 1, except that a fluoroether compound was introduced into the electrolyte. The preparation method of the electrolyte is as follows:

In a glove box under argon atmosphere (H₂O < 0.1 ppm, O₂ < 0.1 ppm), 20% ethylene glycol dimethyl ether (DME), 70% ethylene glycol diethyl ether, and 10% 1,1,2,2-tetrafluoroethyl 2,2,3,3-tetrafluoropropyl ether (TTE) were uniformly mixed to obtain a mixed solvent. Then, a sodium salt, sodium hexafluorophosphate, and potassium hexafluorophosphate including a metal ion, potassium ion, were added to and dissolved in the mixed solvent described above. The mixture was uniformly stirred. The concentration of the sodium salt, sodium hexafluorophosphate, was controlled to be 1 mol/L, and the concentration of the potassium ion was controlled to be 0.03 mol/L, thus preparing the electrolyte.

### Examples 5-31

The batteries of Examples 5 to 31 were prepared using a method substantially similar to that of Example 4, except that the concentration of the metal ion, the type of the metal ion, the type of the ether solvent, the type of the fluoroether compound, the concentration of the fluoroether compound, the type of the sodium salt, and the concentration of the sodium salt were adjusted. The specific parameters are shown in Table 1.

### Comparative Example 1

The battery of Comparative Example 1 was prepared using a method substantially similar to that of Example 1, except that there were no metal ions in the electrolyte. The specific parameters are shown in Table 1.

### Comparative Example 2

The battery of Comparative Example 2 was prepared using a method substantially similar to that of Comparative Example 1, except that a fluoroether compound was added to the electrolyte. The specific parameters are shown in Table 1.

### Comparative Example 3

The battery of Comparative Example 3 was prepared using a method substantially similar to that of Comparative Example 2, except that the type of the ether solvent in electrolyte was adjusted. The specific parameters are shown in Table 1.

### Comparative Example 4

The battery of Comparative Example 4 was prepared using a method substantially similar to that of Example 1, except that the metal ion was adjusted to a magnesium ion (the ionic radius of Mg²⁺ was 0.066 nm; the Mg²⁺ in reduced state was used as an electrode, and the standard electrode potential thereof was -2.375 V). The specific parameters are shown in Table 1.

### II. Performance test

### 1. Test of battery performance

### 1) Test of storage capacity retention rate

At 25 °C, the prepared battery was charged to 3.7 V at a constant current of 0.2 C, then charged at a constant voltage of 3.7 V until the current dropped to 0.05 C, and then discharged to 2.5 V at a constant current of 0.2 C to obtain the discharge capacity before storage (Cd1); next, the battery was again charged to 3.7 V at a constant current of 0.2 C, and then charged at a constant voltage of 3.7 V until the current dropped to 0.05 C. Then, the battery was placed in a constant temperature chamber at 60 °C for storage for 30 days; after being taken out, the battery was placed at 25 °C and charged to 3.7 V at a constant current of 0.2 C, then charged at a constant voltage of 3.7 V until the current dropped to 0.05 C, and then discharged to 2.5 V at a constant current of 0.2 C to obtain the discharge capacity after storage (Cd2). The capacity retention rate of the battery after storage for 30 days at 60 °C was calculated according to the following formula: Storage capacity retention rate = discharge capacity after storage (Cd2)/discharge capacity before storage (Cd1).

### 2) Test of cycle performance

The process for testing the cycle performance was as follows: At 25 °C, the prepared battery was left to stand for 30 min, then discharged to 3.65 V at a constant current of 0.33 C, and then charged at a constant voltage of 3.65 V until the current dropped to 0.05 C, and after being left to stand for 1 h, the battery was discharged to 2.5 V at a constant current of 0.33 C to obtain the initial capacity (C0); after being left to stand for 1 h, the battery was again charged to 3.65 V at a constant current of 0.33 C and then charged at a constant voltage of 3.65 V until the current dropped to 0.05 C, and after being left to stand for 1 h, the battery was discharged to 2.5 V at a constant current of 0.33 C to obtain a process capacity (C1). The steps described above were repeated for the same battery described above, and the process capacity (Cn) of the battery after the 100th cycle was recorded at the same time. The capacity retention rate after 100 cycles = Cn/C1 × 100%. The test process of the comparative examples and other examples was the same as above.

### 3) Test of sodium dendrite

The battery after n cycles of the procedure described above was disassembled in a glove box under argon atmosphere (H₂O < 0.1 ppm, O₂ < 0.1 ppm), and the surface morphology of the negative electrode plate was visually observed to determine whether sodium dendrites were generated. If no white spots were observed on the negative electrode plate, it was determined that no sodium dendrite was generated; if sporadic white spots were observed on the negative electrode plate, it was determined that there was slight presence of sodium dendrites; if dense white spots were observed on the negative electrode plate, it was determined that there was severe presence of sodium dendrites. The test process of the comparative examples and other examples was the same as above.

### III. Analysis of test results of examples and comparative examples

The batteries of the examples and comparative examples were prepared according to the methods described above, and various performance parameters were measured. The results are shown in Table 1 and Table 2 below.

**Table 1**

| Sequence Number | Electrolyte | | | | | | |
|---|---|---|---|---|---|---|---|
| | Substance Including Metal Ion | Concentration of Metal Ion/ (mol/L) | Fluoroether Solvent | | Ether Solvent | Sodium Salt | |
| | | | Substance | Mass Content | | Substance | Concentration/ (mol/L) |
| Example 1 | Potassium hexafluorophosphate | 0.03 | / | / | 22.2% DME:77.8% DEE | Sodium hexafluorophosphate | 1 |
| Example 2 | Potassium hexafluorophosphate | 0.03 | / | / | G2 | Sodium hexafluorophosphate | 1 |
| Example 3 | Calcium hexafluorophosphate | 0.03 | / | / | 22.2% DME:77.8% DEE | Sodium hexafluorophosphate | 1 |
| Example 4 | Potassium hexafluorophosphate | 0.03 | TTE | 10% | 20% DME:70% DEE | Sodium hexafluorophosphate | 1 |
| Example 5 | Potassium hexafluorophosphate | 0.005 | TTE | 10% | 20% DME:70% DEE | Sodium hexafluorophosphate | 1 |
| Example 6 | Potassium hexafluorophosphate | 0.01 | TTE | 10% | 20% DME:70% DEE | Sodium hexafluorophosphate | 1 |
| Example 7 | Potassium hexafluorophosphate | 0.1 | TTE | 10% | 20% DME:70% DEE | Sodium hexafluorophosphate | 1 |
| Example 8 | Potassium hexafluorophosphate | 0.3 | TTE | 10% | 20% DME:70% DEE | Sodium hexafluorophosphate | 1 |
| Example 9 | Potassium hexafluorophosphate | 0.5 | TTE | 10% | 20% DME:70% DEE | Sodium hexafluorophosphate | 1 |
| Example 10 | Potassium hexafluorophosphate | 0.03 | TTE | 2% | 21.7% DME:76.2% DEE | Sodium hexafluorophosphate | 1 |
| Example 11 | Potassium hexafluorophosphate | 0.03 | TTE | 5% | 21.1% DME:73.9% DEE | Sodium hexafluorophosphate | 1 |
| Example 12 | Potassium hexafluorophosphate | 0.03 | TTE | 20% | 17.8% DME:62.2% DEE | Sodium hexafluorophosphate | 1 |
| Example 13 | Potassium hexafluorophosphate | 0.03 | TTE | 30% | 15.6% DME:54.4% DEE | Sodium hexafluorophosphate | 1 |
| Example 14 | Potassium hexafluorophosphate | 0.03 | TTE | 10% | 20% DME:70% DEE | Sodium hexafluorophosphate | 0.5 |
| Example 15 | Potassium hexafluorophosphate | 0.03 | TTE | 10% | 20% DME:70% DEE | Sodium hexafluorophosphate | 0.7 |
| Example 16 | Potassium hexafluorophosphate | 0.03 | TTE | 10% | 20% DME:70% DEE | Sodium hexafluorophosphate | 1.5 |
| Example 17 | Potassium hexafluorophosphate | 0.03 | TTE | 10% | 20% DME:70% DEE | Sodium hexafluorophosphate | 0.1 |
| Example 18 | Potassium hexafluorophosphate | 0.03 | TTE | 10% | 20% DME:70% DEE | Sodium hexafluorophosphate | 1.8 |
| Example 19 | Calcium hexafluorophosphate | 0.03 | TTE | 10% | 20% DME:70% DEE | Sodium hexafluorophosphate | 1 |
| Example 20 | Calcium nitrate | 0.03 | TTE | 10% | 20% DME:70% DEE | Sodium hexafluorophosphate | 1 |
| Example 21 | Strontium nitrate | 0.03 | TTE | 10% | 20% DME:70% DEE | Sodium hexafluorophosphate | 1 |
| Example 22 | Potassium hexafluorophosphate | 0.03 | TTE | 10% | 20% G2:70% DEE | Sodium hexafluorophosphate | 1 |
| Example 23 | Potassium hexafluorophosphate | 0.03 | TTE | 10% | 90% Tetrahydrofuran | Sodium hexafluorophosphate | 1 |
| Example 24 | Potassium hexafluorophosphate | 0.03 | TTE | 10% | 90% DME | Sodium hexafluorophosphate | 1 |
| Example 25 | Potassium hexafluorophosphate | 0.03 | TTE | 10% | 90% G2 | Sodium hexafluorophosphate | |
| Example 26 | Potassium hexafluorophosphate | 0.03 | TTE | 10% | 90% DEE | Sodium hexafluorophosphate | 1 |
| Example 27 | Potassium hexafluorophosphate | 0.03 | TTE | 10% | 20% PC:70% DEC | Sodium hexafluorophosphate | 1 |
| Example 28 | Potassium hexafluorophosphate | 0.03 | TTE | 10% | 20% DME:70% DEE | Sodium perchlorate | 1 |
| Example 29 | Potassium hexafluorophosphate | 0.03 | TTE | 10% | 20% DME:70% DEE | Sodium bis(fluorosulfonyl)imide | 1 |
| Example 30 | Potassium hexafluorophosphate | 0.03 | Bis(2,2,2-trifluoroethyl)ether | 10% | 20% DME:70% DEE | Sodium hexafluorophosphate | 1 |
| Example 31 | Potassium hexafluorophosphate | 0.03 | 1,1,2,2-tetrafluoroethyl methyl ether | 10% | 20% DME:70% DEE | Sodium hexafluorophosphate | 1 |
| Comparative Example 1 | / | / | / | / | 22.2% DME:77.8% DEE | Sodium hexafluorophosphate | 1 |
| Comparative Example 2 | / | / | TTE | 10% | 20% DME:70% DEE | Sodium hexafluorophosphate | 1 |
| Comparative Example 3 | / | / | TTE | 10% | 20% PC:70% DEC | Sodium hexafluorophosphate | 1 |
| Comparative Example 4 | Magnesium hexafluorophosphate | 0.03 | TTE | 10% | 20% DME:70% DEE | Sodium hexafluorophosphate | 1 |

**Table 2**

| Sequence Number | Battery | | |
|---|---|---|---|
| | Cycle Capacity Retention Rate/% | Capacity Retention Rate after 30-day storage at 60 °C% | Sodium Dendrite |
| Example 1 | 81 | 80.3 | Slight |
| Example 2 | 77.6 | 80.1 | Slight |
| Example 3 | 78.2 | 80.1 | Slight |
| Example 4 | 97.2 | 98.8 | None |
| Example 5 | 82.3 | 90.9 | None |
| Example 6 | 90.8 | 94.7 | None |
| Example 7 | 94.5 | 97.5 | None |
| Example 8 | 91.6 | 92.8 | None |
| Example 9 | 80.3 | 81.2 | None |
| Example 10 | 86.3 | 91.3 | None |
| Example 11 | 94.6 | 96.2 | None |
| Example 12 | 93.1 | 95.5 | None |
| Example 13 | 83.8 | 90.0 | None |
| Example 14 | 89.9 | 92.3 | None |
| Example 15 | 95.6 | 96.5 | None |
| Example 16 | 91.1 | 93.0 | None |
| Example 17 | 70.8 | 75.9 | Slight |
| Example 18 | 87.5 | 92.1 | None |
| Example 19 | 94.3 | 98.2 | None |
| Example 20 | 91.5 | 96.1 | None |
| Example 21 | 92.6 | 96.5 | None |
| Example 22 | 96.5 | 97.4 | None |
| Example 23 | 77.9 | 81.8 | Slight |
| Example 24 | 90.8 | 88.3 | None |
| Example 25 | 91.5 | 93.4 | None |
| Example 26 | 91.8 | 95.7 | None |
| Example 27 | 52.5 | 65.4 | Severe |
| Example 28 | 799 | 81.5 | None |
| Example 29 | 86 | 87.9 | None |
| Example 30 | 90.6 | 92.5 | None |
| Example 31 | 86.5 | 90.1 | None |
| Comparative Example 1 | 30.6 | 50.5 | Severe |
| Comparative Example 2 | 51.8 | 62.9 | Severe |
| Comparative Example 3 | 11.4 | 35.4 | Severe |
| Comparative Example 4 | 46.3 | 53.6 | Severe |

From the results described above, it can be seen that the electrolytes of Examples 1-31 include a sodium salt and a metal ion having an ionic radius greater than the ionic radius of sodium ion.

From the comparison between Examples 1-31 and Comparative Examples 1-3, it can be seen that the electrolytes including metal ions having an ionic radius greater than the ionic radius of sodium ion effectively inhibit the generation of sodium dendrites and simultaneously facilitate the improvement in the cycle capacity retention rate and capacity retention rate after 30-day storage at 60 °C of the battery, thus improving the performance of the battery.

From the comparison between Examples 1-31 and Comparative Examples 1-4, it can be seen that compared with the electrolyte including magnesium hexafluorophosphate, the electrolytes in the present application include potassium hexafluorophosphate, calcium hexafluorophosphate, calcium nitrate, or strontium nitrate, which effectively inhibits the generation of sodium dendrites and facilitates the improvement in the cycle capacity retention rate and capacity retention rate after 30-day storage at 60 °C of the battery, thus improving the performance of the battery.

From the comparison between Examples 4-8 and Example 9, it can be seen that controlling the concentration of the metal ion in the electrolyte to be 0.005 mol/L to 0.3 mol/L is conducive to improving the cycle capacity retention rate and capacity retention rate after 30-day storage at 60 °C of the battery. From the comparison between Examples 4 and 6-7 and Examples 5 and 8, it can be seen that further controlling the concentration of the metal ion in the electrolyte to be 0.01 mol/L to 0.1 mol/L is conducive to further substantially improving the capacity retention rate after 30-day storage at 60 °C of the battery.

From the comparison between Examples 4 and 10-13 and Example 1, it can be seen that the addition of the fluoroether compound is conducive to improving the cycle capacity retention rate and capacity retention rate after 30-day storage at 60 °C of the battery and inhibiting the sodium dendrites of the battery. From Examples 4 and 10-13, it can be seen that controlling the mass content of the fluoroether compound to be 2% to 30% based on the total mass of the ether solvent and the fluoroether compound enables the batteries to have excellent cycle capacity retention rate and capacity retention rate after 30-day storage at 60 °C and effectively inhibits the sodium dendrites. From the comparison between Examples 4 and 11-12 and Examples 5 and 13, further controlling the mass content of the fluoroether compound to be 5% to 20% based on the total mass of the ether solvent and the fluoroether compound is conducive to further substantially improving the cycle capacity retention rate and capacity retention rate after 30-day storage at 60 °C of the battery.

From Examples 4 and 14-18, it can be seen that controlling the concentration of the sodium salt in the electrolyte to be 0.1 mol/L to 1.8 mol/L enables the batteries to have excellent cycle capacity retention rate and capacity retention rate after 30-day storage at 60 °C and effectively inhibits the sodium dendrites. From the comparison between Examples 4 and 14-16 and Examples 17-18, it can be seen that further controlling the concentration of the sodium salt in the electrolytes to be 0.5 mol/L to 1.5 mol/L is conducive to further substantially improving the cycle capacity retention rate and capacity retention rate after 30-day storage at 60 °C of the battery.

From Examples 4 and 19-21, it can be seen that the electrolytes including one of potassium hexafluorophosphate, calcium hexafluorophosphate, calcium nitrate, and strontium nitrate all enable the batteries to have excellent cycle capacity retention rate and capacity retention rate after 30-day storage at 60 °C and effectively inhibit the sodium dendrites.

From the comparison between Examples 1-2, 4, and 22-26 and Example 27, it can be seen that controlling the ether solvent in the electrolyte to be selected from ethylene glycol dimethyl ether, ethylene glycol diethyl ether, or diethylene glycol dimethyl ether is conducive to improving the cycle capacity retention rate and capacity retention rate after 30-day storage at 60 °C of the battery and inhibiting the sodium dendrite phenomenon of the battery.

From the comparison between Example 4 and Examples 24 and 26 and the comparison between Example 22 and Examples 24-25, it can be seen that controlling the ether solvent in the electrolyte to be selected from at least two of ethylene glycol dimethyl ether, ethylene glycol diethyl ether, and diethylene glycol dimethyl ether is conducive to further substantially improving the cycle capacity retention rate and capacity retention rate after 30-day storage at 60 °C of the battery.

From Examples 4 and 28-29, it can be seen that allowing the sodium salts to include one of sodium hexafluorophosphate, sodium perchlorate, and sodium bis(fluorosulfonyl)imide enables the batteries to have excellent cycle capacity retention rate and capacity retention rate after 30-day storage at 60 °C and effectively inhibits the sodium dendrites. From the comparison between Example 1 and Example 3 and the comparison between Example 4 and Example 19, it can be seen that compared with the metal ions including Ca²⁺, the metal ions including K⁺ are conducive to further improving the cycle capacity retention rate and capacity retention rate after 30-day storage at 60 °C of the battery.

From Examples 4 and 30-31, it can be seen that allowing the sodium salts to include one of 1,1,2,2-tetrafluoroethyl 2,2,3,3-tetrafluoropropyl ether, bis(2,2,2-trifluoroethyl)ether, and 1,1,2,2-tetrafluoroethyl methyl ether enables the batteries to have excellent cycle capacity retention rate and capacity retention rate after 30-day storage at 60 °C and effectively inhibits the sodium dendrites.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, various modifications that can be conceived by those skilled in the art to the embodiments, as well as other embodiments formed by combining some of the constituent elements of the embodiments, are also included within the scope of the present application.

## Claims

1. An electrolyte for a sodium secondary battery, the electrolyte comprising a sodium salt and a metal ion having an ionic radius greater than an ionic radius of a sodium ion.

2. The electrolyte according to claim 1, wherein the metal ion comprises one or more of K⁺, Ca²⁺, Sr²⁺, and Ba²⁺, and optionally, comprises K⁺.

3. The electrolyte according to claim 1 or 2, wherein the electrolyte comprises one or more of PF₆⁻, NO₃⁻, and ClO₃⁻.

4. The electrolyte according to any one of claims 1 to 3, wherein the electrolyte comprises one or more of potassium hexafluorophosphate, calcium hexafluorophosphate, strontium hexafluorophosphate, barium hexafluorophosphate, potassium nitrate, calcium nitrate, strontium nitrate, barium nitrate, potassium perchlorate, calcium perchlorate, strontium perchlorate, and barium perchlorate, and optionally, comprises one or more of potassium hexafluorophosphate, potassium nitrate, and calcium hexafluorophosphate.

5. The electrolyte according to any one of claims 1 to 4, wherein a concentration of the metal ion in the electrolyte is 0.005 mol/L to 0.3 mol/L, and optionally, 0.01 mol/L to 0.1 mol/L.

6. The electrolyte according to any one of claims 1 to 5, wherein the sodium salt comprises one or more of sodium chloride, sodium bromide, sodium nitrate, sodium perchlorate, sodium hexafluorophosphate, sodium acetate, sodium trifluoroacetate, sodium trifluoromethanesulfonate, sodium bis(fluorosulfonyl)imide, sodium bis(trifluoromethylsulfonyl)imide, sodium tetrafluoroborate, and sodium tetraphenylborate, and optionally, comprises one or more of sodium hexafluorophosphate, sodium perchlorate, sodium bis(fluorosulfonyl)imide, sodium bis(trifluoromethylsulfonyl)imide, and sodium tetrafluoroborate.

7. The electrolyte according to any one of claims 1 to 6, wherein a concentration of the sodium salt in the electrolyte is 0.1 mol/L to 1.8 mol/L, and optionally, 0.5 mol/L to 1.5 mol/L.

8. The electrolyte according to any one of claims 1 to 7, wherein the electrolyte further comprises an ether solvent, and the ether solvent comprises one or more of ethylene glycol dimethyl ether, diethylene glycol dimethyl ether, triethylene glycol dimethyl ether, tetraethylene glycol dimethyl ether, polyethylene glycol dimethyl ether, diethyl ether, ethylene glycol diethyl ether, ethylene glycol dibutyl ether, diethylene glycol diethyl ether, diethylene glycol dibutyl ether, tetrahydrofuran, methyl tetrahydrofuran, and 1,3-dioxolane, and optionally, comprises one or more of ethylene glycol diethyl ether, ethylene glycol dimethyl ether, ethylene glycol diethyl ether, diethylene glycol dimethyl ether, tetraethylene glycol dimethyl ether, and diethylene glycol dibutyl ether.

9. The electrolyte according to claim 8, wherein the ether solvent comprises at least two of ethylene glycol dimethyl ether, diethylene glycol dimethyl ether, triethylene glycol dimethyl ether, tetraethylene glycol dimethyl ether, polyethylene glycol dimethyl ether, ethylene glycol diethyl ether, ethylene glycol dibutyl ether, tetrahydrofuran, methyl tetrahydrofuran, and 1,3-dioxolane, and optionally, comprises at least two of ethylene glycol diethyl ether, ethylene glycol dimethyl ether, diethylene glycol dimethyl ether, triethylene glycol dimethyl ether, and tetraethylene glycol dimethyl ether.

10. The electrolyte according to any one of claims 1 to 9, wherein the electrolyte further comprises a fluoroether compound, and the fluoroether compound comprises one or more of 1,1,2,2-tetrafluoroethyl 2,2,3,3-tetrafluoropropyl ether, bis(2,2,2-trifluoroethyl)ether, 1,1,2,2-tetrafluoroethyl methyl ether, 1,1,2,2-tetrafluoroethyl-2,2,2-trifluoroethyl ether, tris(trifluoroethoxy)methane, methyl nonafluorobutyl ether, 1,1,1,3,3,3-hexafluoroisopropyl methyl ether, and 1H,1H,5H-octafluoropentyl-1,1,2,2-tetrafluoroethyl ether, and optionally, comprises one or more of 1,1,2,2-tetrafluoroethyl 2,2,3,3-tetrafluoropropyl ether and bis(2,2,2-trifluoroethyl)ether.

11. The electrolyte according to claim 10, wherein a mass content of the fluoroether compound is 2% to 30%, and optionally, 5% to 20%, based on the total mass of the ether solvent and the fluoroether compound.

12. The electrolyte according to claim 10 or 11, wherein the sodium salt comprises sodium hexafluorophosphate, the metal ion comprises K⁺, the ether solvent comprises ethylene glycol dimethyl ether, and the fluoroether compound comprises 1,1,2,2-tetrafluoroethyl 2,2,3,3-tetrafluoropropyl ether.

13. A secondary battery, comprising the electrolyte according to any one of claims 1 to 12.

14. The secondary battery according to claim 13, wherein the secondary battery is a negative electrode-free sodium secondary battery.

15. The secondary battery according to any one of claims 13 to 14, wherein the secondary battery further comprises a negative electrode plate, the negative electrode plate comprises a negative electrode current collector and a bottom coating arranged on at least one surface of the negative electrode current collector, and the bottom coating comprises one or more of a carbon nanotube, graphite, graphene, a silver-carbon composite nanoparticle, and a tin-carbon composite nanoparticle.

16. The secondary battery according to claim 15, wherein a surface density of the bottom coating is 0.5 g/m² to 35 g/m².

17. The secondary battery according to claim 15 or 16, wherein a thickness of the bottom coating is 0.2 µm to 50 µm.

18. An electrical apparatus, comprising the secondary battery according to any one of claims 15 to 17.
